(19)

Europäisches Patentamt

European Patent Office

Office européen des brevets

(11)  **EP 4 478 433 A1**

(12)  **EUROPEAN PATENT APPLICATION**

(43) Date of publication:
    **18.12.2024 Bulletin 2024/51**

(21) Application number: **24174266.7**

(22) Date of filing: **06.05.2024**

(51) International Patent Classification (IPC):
    **H01M 4/02** *(2006.01)*     **H01M 4/587** *(2010.01)*
    **H01M 10/0525** *(2010.01)*

(52) Cooperative Patent Classification (CPC):
    **H01M 4/587; H01M 10/0525;** H01M 2004/021;
    H01M 2004/027; Y02E 60/10

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority: **11.05.2023 CN 202310529702**

(71) Applicant: **CALB Group Co., Ltd.**
    **Changzhou City, Jiangsu Province (CN)**

(72) Inventors:
    • **GUO, Dexiang**
      **Changzhou City, Jiangsu Province (CN)**
    • **SHEN, Taotao**
      **Changzhou City, Jiangsu Province (CN)**
    • **SHAN, Xuyi**
      **Luoyang City, Henan Province (CN)**

(74) Representative: **Becker, Eberhard**
    **Becker Kurig & Partner**
    **Patentanwälte mbB**
    **Bavariastraße 7**
    **80336 München (DE)**

(54)  **NEGATIVE ELECTRODE SHEET, SECONDARY BATTERY AND ELECTRICAL DEVICE**

(57)    The disclosure discloses a negative electrode sheet and applications thereof, belonging to the technical field of batteries. The negative electrode sheet of the disclosure includes a negative electrode current collector and a negative electrode active material layer disposed on at least one surface of the negative electrode current collector, in which the negative electrode active material layer includes a negative electrode active material, the negative electrode active material includes graphite, and the negative electrode sheet satisfies an equation as follows: $1.0 \times 10^{-3} \leq (|La1\text{-}La2|/Lax)/(V_{OI} \times D_V 50) \leq 3.0 \times 10^{-3}$. The disclosure promotes the rapid insertion and extraction of lithium ions by reasonably limiting the crystal size and orientation value of the negative electrode sheet and the particle size of the negative electrode active material, so that the battery containing the negative electrode sheet has excellent fast charging performance and cycle life.

FIG. 1

EP 4 478 433 A1

**Description**

**BACKGROUND**

Technical Field

The disclosure relates to the technical field of batteries, and in particular to a negative electrode sheet, a secondary battery and an electrical device.

Description of Related Art

In recent years, with the continuous development of electric vehicles replacing fuel vehicles, people have higher and higher demands on the performance of electric vehicle batteries: not only higher energy density is required to improve the driving range, but also faster charging speed is required to improve the charging time. Therefore, how to improve the charging speed of the battery becomes one of the problems to be solved urgently.

Lithium ion batteries have the advantages of high energy density, long cycle life, and environmental friendliness, and are widely used in the field of electric vehicles. At present, the improvement of the fast charging performance of lithium ion batteries mainly depends on the development and improvement of negative electrode materials. Among the materials, graphite negative electrode materials are currently the mainstream negative electrode materials for power batteries because of good cycle performance and rate performance, and good selectivity for electrolyte. However, conventional graphite-based negative electrode materials have a limited diffusion rate for lithium ions and are prone to cause the precipitation of metallic lithium within a very short number of cycles, resulting in a short cycle life, thereby it is difficult to meet the demands for fast charging and cycle life of power batteries.

Therefore, how to improve the charging rate and cycle life of the battery has become a technical problem that needs to be solved urgently by persons skilled in the art.

**SUMMARY**

The purpose of the disclosure is to overcome the shortcomings of the related art and provide a negative electrode sheet, a secondary battery and an electrical device, the disclosure promotes lithium ions to rapid insert and extract from the negative electrode sheet by reasonably limiting the crystal size and orientation value of the negative electrode sheet and the particle size of the negative electrode active material, so that the battery containing the negative electrode sheet has excellent fast charging performance and cycle life.

To achieve the above purpose, in the first aspect of the disclosure, the disclosure provides a negative electrode sheet, which includes:

a negative electrode current collector and a negative electrode active material layer disposed on at least one surface of the negative electrode current collector,
the negative electrode active material layer including a negative electrode active material;
the negative electrode active material including graphite;
the negative electrode sheet satisfying an equation as follows:

$$1.0 \times 10^{-3} \leq (|La1\text{-}La2|/Lax)/(V_{OI} \times D_V 50) \leq 3.0 \times 10^{-3},$$

wherein La1 is the average crystal size in the a-axis direction of the negative electrode sheet obtained by XRD measurement, and the unit is nm,
La2 is the average crystal size in the a-axis direction of the negative electrode sheet obtained by Raman spectroscopy measurement, and the unit is nm,
Lax is the larger value of La1 and La2,
Voi is the ratio of the peak intensity $I_{004}$ of the (004) crystal plane to the peak intensity $I_{110}$ of the (110) crystal plane of the negative electrode sheet obtained by XRD measurement,
Dv50 is the particle size corresponding to when the cumulative volume distribution percentage of the negative electrode active material reaches 50%, and the unit is $\mu$m.

As an alternative embodiment of the disclosure, the negative electrode sheet satisfies an equation as follows:
$1.2 \times 10^{-3} \leq (|La1\text{-}La2|/Lax)/(V_{OI} \times D_V 50) \leq 2.5 \times 10^{-3}$.

As an alternative embodiment of the disclosure, the range of La1 is 30 to 70 nm.

As an alternative embodiment of the disclosure, the range of La2 is 50 to 80 nm.

As an alternative embodiment of the disclosure, the range of La1 is 45 to 60 nm, and the range of La2 is 65 to 75 nm.

As an alternative embodiment of the disclosure, the range of Voi is 10 to 35.

As an alternative embodiment of the disclosure, the range of Voi is 11 to 15.

As an alternative embodiment of the disclosure, the range of Dv50 is 5 to 20 $\mu$m.

As an alternative embodiment of the disclosure, the range of Dv50 is 8 to 15 $\mu$m.

As an alternative embodiment of the disclosure, the porosity P of the negative electrode sheet is 20 to 45%.

As an alternative embodiment of the disclosure, the porosity P of the negative electrode sheet is 30 to 40%.

In the second aspect of the disclosure, the disclosure provides a secondary battery, which includes a positive electrode sheet, a negative electrode sheet, and an electrolyte, in which the negative electrode sheet is the negative electrode sheet mentioned above.

In the third aspect of the disclosure, the disclosure provides an electrical device, which includes the secondary battery mentioned above.

The beneficial effects of the disclosure are as follows.

The disclosure promotes lithium ions to rapid insert and extract from the negative electrode sheet by reasonably limiting the crystal size and orientation value of the negative electrode sheet and the particle size of the negative electrode active material, so that the battery containing the negative electrode sheet has excellent fast charging performance and cycle life.

## BRIEF DESCRIPTION OF THE DRAWINGS

For a better understanding of the invention, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate corresponding parts throughout the several views. For a better understanding of the invention, reference may be made to exemplary embodiments shown in the following drawings. The components in the drawings are not necessarily to scale and related elements may be omitted, or in some instances proportions may have been exaggerated.

FIG1 is an XRD pattern of a negative electrode sheet prepared in Example 2 of the disclosure.

FIG. 2 is a Raman spectrum of the negative electrode sheet prepared in Example 2 of the disclosure.

## DESCRIPTION OF THE EMBODIMENTS

In order to make the purpose, technical solutions, and advantages of the embodiments of the disclosure clearer, the technical solutions in the embodiments of the disclosure will be clearly and completely described below. Certainly, the described embodiments are only part of the embodiments of the disclosure, rather than all embodiments. Based on the embodiments of the disclosure, all other embodiments obtained by persons of ordinary skill in this field without making any creative work are within the scope of protection of the disclosure.

In the disclosure, the technical features described in an open manner include closed technical solutions composed of the listed features, and also include open technical solutions comprising the listed features.

In the disclosure, when it comes to numerical ranges, unless otherwise specified, the numerical range is deemed to be continuous and includes the minimum and maximum values of the range, and every value between the minimum and maximum values. Furthermore, when range refers to an integer, every integer between the minimum value and the maximum value of the range is included. Additionally, when multiple ranges are provided to describe a feature or characteristic, the ranges may be merged. In other words, unless otherwise indicated, all ranges disclosed herein should be understood to encompass any and all sub-ranges subsumed therein.

In the disclosure, there is no particular limitation on the specific dispersion and stirring methods.

The reagents or instruments used in the disclosure without indicating the manufacturer are all conventional products that may be obtained through commercial purchase.

Negative Electrode Sheet

An embodiment of the disclosure provides a negative electrode sheet, which includes the following.

A negative electrode current collector and a negative electrode active material layer disposed on at least one surface of the negative electrode current collector are provided, in which the negative electrode active material layer includes a negative electrode active material, and the negative electrode active material includes graphite.

The negative electrode sheet satisfies the following equation.

$1.0\times10^{-3}\leq(|La1-La2|/Lax)/(V_{OI}\times D_V50)\leq3.0\times10^{-3}$, and a description of the equation is as follows.

La1 is the average crystal size in the a-axis direction of the negative electrode sheet obtained by XRD measurement, and the unit is nm.

La2 is the average crystal size in the a-axis direction of the negative electrode sheet obtained by Raman spectroscopy measurement, and the unit is nm.

Lax is the larger value of La1 and La2.

Voi is the ratio of the peak intensity $I_{004}$ of the (004) crystal plane to the peak intensity $I_{110}$ of the (110) crystal plane of the negative electrode sheet obtained by XRD measurement.

Dv50 is the particle size corresponding to when the cumulative volume distribution percentage of the negative electrode active material reaches 50%, and the unit is $\mu$m.

The La1 value of the negative electrode sheet may be obtained by adopting an X-ray diffraction (XRD) test and calculating using the Scherrer formula; in which the XRD test conditions may adopt methods known in the art. The La2 value of the negative electrode is tested by Raman spectroscopy and calculated by the following formula: $La2=2.4\times10^{-10}\times\lambda^4\times(A_D/A_G)^{-1}$, in which $\lambda$ is the incident laser wavelength of the Raman spectrum, $A_D$ is the peak area of the D peak (located in the 1320 to 1380cm$^{-1}$ wave band area) in the Raman spectrum, and $A_G$ is the peak area of the G peak (located in the 1560 to 1600cm$^{-1}$ wave band area) in the Raman spectrum.

For negative electrode active materials containing graphite, the change in the average crystal size La is affected by the graphitization degree. When heteroatoms or molecules are inserted between the surface layers of graphite, the average crystal size La is changed. Since the graphitization process is a nonlinear continuous and jump process, the physical and chemical structure of graphite is not uniform. When conditions such as pretreatment temperature and pressure are varied, new components with different graphitization degrees may coexist. When the components with different graphitization degrees reach a certain content, the Raman parameters for evaluating the degree of ordering may be different from the evolution trajectory of the XRD parameters. Therefore, there are certain differences between the La1 value and La2 value of the same negative electrode sheet.

The inventors have found that the difference between La1 measured by XRD and La2 measured by Raman spectroscopy may be used to comprehensively evaluate the graphitization degree of the negative electrode sheet and the degree to which graphite is affected by heteroatoms. In the disclosure, the difference rate between La1 and La2 is expressed by the ratio of |La1-La2| to Lax. The greater the difference between the two values, the more internal defects there are in the graphite. The difference rate between La1 and La2 affects the fast charging performance of the battery on the one hand, and the high temperature resistance of the battery on the other. The inventors have found that when the difference rate between La1 and La2 is within a suitable range so that the negative electrode sheet satisfies the equation mentioned above, the battery has both excellent fast charging performance and high temperature performance, and has a high cycle life under fast charging or high temperature conditions.

The Voi of the negative electrode sheet represents the orientation index of the material. Voi may be detected by a method as follows. The negative electrode sheet prepared is directly placed into an X-ray diffractometer, the peak intensity $I_{004}$ of the (004) crystal plane diffraction peak and the peak intensity $I_{110}$ of the (110) crystal plane diffraction peak of the negative electrode active material in the negative electrode sheet are obtained by X-ray diffraction analysis. The Voi of the negative electrode sheet is $I_{004}/I_{110}$.

Dv50 is the particle size corresponding to when the cumulative volume distribution percentage of the negative electrode active material reaches 50%. The disclosure does not limit the detection method of $D_V50$. Persons skilled in the art may detect the $D_V50$ of the negative electrode active material according to conventional technical means. For example, the $D_V50$ is detected by laser particle sizer.

The inventors of the disclosure have found through extensive research that, for negative electrode sheets containing negative electrode active materials, $V_{OI}\times D_V50$ can comprehensively judge the morphological characteristics of the negative electrode active materials, such as orientation and particle size, by further combining the ratio of |La1-La2| to Lax, the grain size of the negative electrode sheet and the morphology characteristics of the negative electrode active material are reasonably controlled, thereby the fast charging performance and cycle life of the lithium ion battery are improved.

In an embodiment, the negative electrode sheet satisfies an equation as follows: $1.2\times10^{-3}\leq(|La1-La2|/Lax)/(V_{OI}\times D_V50)\leq2.5\times10^{-3}$. When the negative electrode sheet satisfies the range of the equation, the overall performance of the negative electrode sheet is relatively better, so that the fast charging performance and cycle life of the lithium ion battery are relatively more balanced. For example, in some embodiments, the value of $(|La1-La2|/Lax)/(V_{OI}\times D_V50)$ of the negative electrode sheet is $1.2\times10^{-3}$, $1.3\times10^{-3}$, $1.5\times10^{-3}$, $1.8\times10^{-3}$, $2.0\times10^{-3}$, $2.3\times10^{-3}$, $2.5\times10^{-3}$.

In an embodiment, the range of La1 is 30 to 70 nm, for example, 32 nm, 37 nm, 41 nm, 45 nm, 52 nm, 58 nm, 60 nm, 67 nm.

In an embodiment, the range of La2 is 50 to 80 nm, for example, 55 nm, 59 nm, 65 nm, 67 nm, 69 nm, 72 nm, 75 nm, 79 nm.

In an embodiment, the range of La1 is 45 to 60 nm, and the range of La2 is 65 to 75 nm.

La1 and La2 of the negative electrode sheet may be controlled by graphitizing the negative electrode active material under different conditions such as temperature, time, and pressure. When the value of La1 or La2 of the negative electrode sheet is too small, the crystallinity of the negative electrode active material is relatively low and the capacity is small, which limits the improvement of the energy density of the lithium ion battery. When the value of La1 or La2 of the negative electrode sheet is too large, the diffusion distance of lithium ions after being inserted in the negative electrode active material layer is lengthened, resulting in an increase in diffusion resistance, and lithium precipitation is prone to occur during high-rate charging and discharging, thereby the cycle life of the battery is reduced.

In an embodiment, the range of Voi is 10 to 35, for example, 10.5, 11.4, 12.7, 13.5, 15.9, 17.1, 24.4, 27.5, 33.9.

In an alternative embodiment, the range of $V_{OI}$ is 11 to 15.

The Voi of the negative electrode sheet may be controlled by methods such as adjusting the compaction density of the negative electrode sheet or adjusting the Voi value of the negative electrode active material. When the Voi value of the negative electrode sheet is small, the negative electrode active material more likely presents as being perpendicular to the current collector direction, the said direction is conducive to the insertion and extraction of lithium ions and then the fast charging performance of the battery can be significantly improved; when the Voi value is too small, the negative electrode sheet is prone to wrinkle during charging, thereby the cycle performance of the battery is degraded.

In an embodiment, the range of $D_V50$ is 5 to 20 μm, for example, 7 μm, 8 μm, 10 μm, 11 μm, 13 μm, 15 μm, 18 μm.

In an alternative embodiment, the range of $D_V50$ is 8 to 15 μm.

When the Dv50 of the negative electrode active material is small, the distance path of lithium ion solid phase transmission is relatively shorter, which helps improve the fast charging performance of the battery. However, $D_V50$ should not be too small, which makes the processing of the negative electrode active material layer difficult, resulting in low compaction density of the negative electrode material and deterioration of the electrochemical performance of the battery.

In an embodiment, the porosity P of the negative electrode sheet is in a range of 20 to 45%, for example, 20%, 25%, 30%, 35%, 40%, 45%.

In an alternative embodiment, the porosity P of the negative electrode sheet is in a range of 30 to 40%.

Generally speaking, the porosity of the negative electrode sheet indirectly reflects the liquid-phase diffusion resistance of lithium ions inside the pores of the negative porous electrode. The larger the porosity, the smaller the liquid-phase diffusion resistance, which helps improve the fast charging performance of the battery. However, when the porosity is too high, the electronic conductivity of the negative electrode is decreased, thereby the electrochemical performance of the battery is affected. The inventors have found that, on the basis that the equation above is satisfied, when the porosity of the negative electrode sheet of the disclosure is in a range of 20 to 45%, especially in a range of 30 to 40%, the fast charging performance and cycle life of the battery containing the negative electrode sheet are relatively better.

The graphite in the negative electrode active material of the disclosure may include natural graphite and/or artificial graphite. The negative electrode active material of the disclosure may be prepared by adopting at least one of needle coke, pitch coke, or petroleum coke as a raw material.

As for the negative electrode sheet, the disclosure has no particular limitation on the negative electrode current collector, as long as the current collector has high conductivity and does not cause adverse chemical changes in the battery. For example, the following may be used: copper, stainless steel, aluminum, nickel, titanium, fired carbon; copper or stainless steel surface-treated with one of carbon, nickel, titanium, or silver; or an aluminum-cadmium alloy.

The negative electrode active material layer of the negative electrode sheet may include a conductive agent and a binder in addition to the negative electrode active material.

The conductive agent plays a role in improving the conductivity of the negative electrode active material layer. The disclosure has no particular limitation on the conductive agent. For example, the following may be used: carbon powders such as carbon black, acetylene black, Ketjen black, channel black, furnace black, lamp black, or thermal carbon black; graphite powders such as natural graphite or artificial graphite; conductive fibers such as carbon fibers or metal fibers; or conductive whiskers such as zinc oxide whiskers or potassium titanate whiskers.

The binder plays a role in enhancing the adhesion among the conductive agent, the negative electrode active material, and the negative electrode current collector. The disclosure has no particular limitation on the binder. For example, the following may be used: polymer materials such as fluororesin binders, rubber binders, cellulose binders, polyol binders, polyolefin binders, polyimide binders, polyester binders, or silane binders.

In addition, the negative electrode active material layer may further include a thickener, and carboxymethyl cellulose may be used as the thickener.

It should be noted that the method for preparing the negative electrode sheet is not particularly limited in the disclosure, and persons skilled in the art may prepare a negative electrode sheet according to conventional methods.

Exemplarily, the method for preparing the negative electrode sheet is as follows.

The negative electrode current collector may be coated with a negative electrode slurry prepared by dissolving or dispersing the negative electrode active material and optionally a binder and a conductive agent in a solvent, followed by rolling or drying.

Alternatively, the method for preparing the negative electrode sheet may be as follows. The negative electrode slurry is casted on a separate carrier, and then the film layer separated from the carrier is laminated on the negative electrode current collector.

Secondary Battery

An embodiment of the disclosure provides a secondary battery, including a positive electrode sheet, a negative electrode sheet, and an electrolyte, in which the negative electrode sheet is the negative electrode sheet mentioned above.

The positive electrode sheet of the disclosure includes a positive electrode current collector and a positive electrode active material layer disposed on at least one surface of the positive electrode current collector. The positive electrode active material layer includes a positive electrode active material, and may further include a conductive agent and/or a binder.

The disclosure has no particular limitation on the positive electrode current collector, as long as the current collector has high conductivity and does not cause adverse chemical changes in the battery. For example, the following may be used: copper, stainless steel, aluminum, nickel, titanium, fired carbon; copper or stainless steel surface-treated with one of carbon, nickel, titanium, or silver; or an aluminum-cadmium alloy. The positive electrode current collector may be the same as or different from the negative electrode current collector of the disclosure.

The positive electrode active material is a compound capable of reversibly inserting and deinserting lithium. For example, the positive electrode active material may include a lithium composite metal oxide, and the lithium composite metal oxide includes lithium and at least one metal selected from the group consisting of nickel (Ni), cobalt (Co), manganese (Mn), iron (Fe), and aluminum (Al). Specifically, the positive electrode active material may include at least one of $Li(Ni_{0.6}Mn_{0.2}Co_{0.2})O_2$, $Li(Ni_{0.7}Mn_{0.2}Co_{0.10})O_2$, $Li(Ni_{0.8}Mn_{0.1}Co_{0.1})O_2$, $Li(Ni_{0.8}Co_{0.15}Al_{0.05})O_2$, $Li(Ni_{0.86}Mn_{0.07}Co_{0.05}Al_{0.02})O_2$, and $Li(Ni_{0.9}Mn_{0.05}Co_{0.05})O_2$.

The conductive agent plays a role in improving the conductivity of the positive electrode active material layer, and the disclosure has no particular limitation on the conductive agent. The conductive agent in the positive electrode sheet may be the same as or different from the conductive agent in the negative electrode sheet of the disclosure.

The binder plays a role in enhancing the adhesion among the conductive agent, the positive electrode active material, and the positive electrode current collector. The disclosure has no particular limitation on the binder. The binder in the positive electrode sheet may be the same as or different from the binder in the negative electrode sheet of the disclosure.

It should be noted that the method for preparing the positive electrode sheet is not particularly limited in the disclosure, and persons skilled in the art may prepare a positive electrode sheet according to conventional methods.

Exemplarily, the method for preparing the positive electrode sheet is as follows.

The positive electrode current collector may be coated with a positive electrode slurry prepared by dissolving or dispersing the positive electrode active material and optionally a binder and a conductive agent in a solvent, followed by rolling or drying.

Alternatively, the method for preparing the positive electrode sheet may be as follows. The positive electrode slurry is casted on a separate carrier, and then the film layer separated from the carrier is laminated on the positive electrode current collector.

The electrolyte solution of the disclosure may be any electrolyte solution suitable for electrochemical energy storage devices in the art. The electrolyte solution includes an electrolyte and a solvent. The electrolyte may generally include a lithium salt. More specifically, the lithium salt may be an inorganic lithium salt and/or an organic lithium salt. The solvent in the electrolyte solution is usually a non-aqueous solvent. Specifically, the solvent includes at least one of ethylene carbonate, propylene carbonate, butylene carbonate, pentyl carbonate, dimethyl carbonate, diethyl carbonate, dipropyl carbonate, ethyl methyl carbonate, or halogenated derivatives thereof.

The secondary battery may further include a separator. The separator is located between the positive electrode sheet and the negative electrode sheet and is used to separate the positive electrode sheet and the negative electrode sheet to prevent the positive electrode sheet and the negative electrode sheet from contacting and short-circuiting. The separator may be made of any material suitable for use as a separator for electrochemical energy storage devices in the art. Specifically, the separator includes at least one of polyethylene, polypropylene, polyvinylidene fluoride, aramid, polyethylene terephthalate, polytetrafluoroethylene, polyacrylonitrile, polyimide, polyamide, polyester, and natural fiber.

Electrical Device

An embodiment of the disclosure provides an electrical device, including the secondary battery mentioned above. The secondary battery serves as a power supply for the electrical device.

The disclosure is further described below with specific embodiments as follows.

Example 1

This embodiment provided a lithium ion battery, and the specific preparation method was as follows.

(1) Preparation of Negative Electrode Sheet

The needle coke raw material was crushed and sieved to obtain graphite powder; then graphitization was performed on the graphite powder at 2650°C for 6 hours under an inert atmosphere; and after cooling, crushing, and sieving, an active negative electrode material with a $D_V50$ of 10.5 μm was obtained.

The active negative electrode material, binder (sodium carboxymethyl cellulose), and conductive agent (acetylene black) were mixed in a mass ratio of 98:1.5:0.5, made into slurry by wet process, and the slurry was coated on the upper and lower surfaces of the negative electrode current collector (copper foil), and then the negative electrode sheet was obtained after drying (at temperature 85°C, for 5h), rolling, and slitting.

(2) Preparation of Positive Electrode Sheet

The positive electrode active material $Li(Ni_{0.8}Mn_{0.1}Co_{0.1})O_2$, binder (polyvinylidene fluoride), and conductive agent (acetylene black) were mixed in a mass ratio of 98:1:1, added with N-methylpyrrolidone (NMP), stirred under the action of a vacuum stirrer until the mixed system becomes a positive electrode slurry with uniform fluidity; the positive electrode slurry is evenly coated on the positive electrode current collector (aluminum foil) with a thickness of 9-12 μm; and then the positive electrode sheet is obtained after drying (at temperature 120°C, for 8h), rolling, and slitting.

(3) Preparation of Electrolyte Solution

The electrolyte solution was a 1 mol/L $LiPF_6$ solution, and the solvent was a mixed solvent of ethylene carbonate (EC), ethyl methyl carbonate (EMC), and diethyl carbonate (DEC), with the volume ratio of EC, EMC, and DEC being 1:1:1.

(4) Preparation of Separator

Polyethylene (PE) separator coated with ceramic and polyvinylidene fluoride was adopted.

(5) Preparation of Battery

The positive electrode sheet, separator, and negative electrode sheet prepared above were wound to obtain a bare battery core without liquid injection; the bare battery core was placed in an outer packaging foil, the electrolyte solution prepared was injected into the dried bare battery core, and a lithium ion battery was obtained after processes such as vacuum packaging, standing, formation, shaping, and sorting.

Example 2

This embodiment provided a lithium ion battery, the specific preparation method was basically the same as Example 1, while the difference was as follows.

In the preparation of the negative electrode sheet, the needle coke raw material was crushed and sieved to obtain graphite powder; then, graphitization was performed on the graphite powder at 2500°C for 6 hours under an inert atmosphere. After cooling, crushing, and sieving, the active negative electrode material with a Dv50 of 10 μm was obtained.

Example 3

This embodiment provided a lithium ion battery, the specific preparation method was basically the same as Example 1, while the difference was as follows.

In the preparation of the negative electrode sheet, the petroleum coke raw material was crushed and sieved to obtain graphite powder; then, graphitization was performed on the graphite powder at 3100°C for 8 hours under an inert atmosphere. After cooling, crushing, and sieving, the active negative electrode material with a Dv50 of 10.7 μm was obtained.

Example 4

This embodiment provided a lithium ion battery, the specific preparation method was basically the same as Example 1, while the difference was as follows.

In the preparation of the negative electrode sheet, the petroleum coke raw material was crushed and sieved to obtain graphite powder; then, graphitization was performed on the graphite powder at 2900°C for 6 hours under an inert atmosphere. After cooling, crushing, and sieving, the active negative electrode material with a Dv50 of 15.1 $\mu$m was obtained.

Example 5

This embodiment provided a lithium ion battery, the specific preparation method was basically the same as Example 4, while the difference was as follows.

In the preparation of the negative electrode sheet, the rolling pressure was adjusted so that the porosity of the negative electrode sheet prepared was 45%.

Example 6

This embodiment provided a lithium ion battery, the specific preparation method was basically the same as Example 4, while the difference was as follows.

In the preparation of the negative electrode sheet, the rolling pressure was adjusted so that the porosity of the negative electrode sheet prepared was 22%.

Example 7

This embodiment provided a lithium ion battery, the specific preparation method was basically the same as Example 1, while the difference was as follows.

In the preparation of the negative electrode sheet, the petroleum coke raw material was crushed and sieved to obtain graphite powder; then, graphitization was performed on the graphite powder at 2800°C for 6 hours under an inert atmosphere. After cooling, crushing, and sieving, the active negative electrode material with a Dv50 of 8.2 $\mu$m was obtained.

Example 8

This embodiment provided a lithium ion battery, the specific preparation method was basically the same as Example 1, while the difference was as follows.

In the preparation of the negative electrode sheet, the needle coke raw material was crushed and sieved to obtain graphite powder; then, graphitization was performed on the graphite powder at 3000°C for 6 h under an inert atmosphere. After cooling, crushing, and sieving, the active negative electrode material with a Dv50 of 11.2 $\mu$m was obtained.

Example 9

This embodiment provided a lithium ion battery, the specific preparation method was basically the same as Example 1, while the difference was as follows.

In the preparation of the negative electrode sheet, the needle coke raw material was crushed and sieved to obtain graphite powder; then, graphitization was performed on the graphite powder at 3100°C for 10 hours under an inert atmosphere. After cooling, crushing, and sieving, the active negative electrode material with a Dv50 of 5 $\mu$m was obtained.

Example 10

This embodiment provided a lithium ion battery, the specific preparation method was basically the same as Example 1, while the difference was as follows.

In the preparation of the negative electrode sheet, the petroleum coke raw material was crushed and sieved to obtain graphite powder; then, graphitization was performed on the graphite powder at 2500°C for 6 hours under an inert atmosphere. After cooling, crushing, and sieving, the active negative electrode material with a Dv50 of 19.6 $\mu$m was obtained.

Embodiment 11

This embodiment provided a lithium ion battery, the specific preparation method was basically the same as Example 1, while the difference was as follows.

In the preparation of the negative electrode sheet, the asphalt coke raw material was crushed and sieved to obtain graphite powder; then, graphitization was performed on the graphite powder at 2800°C for 6 hours under an inert atmosphere. After cooling, crushing, and sieving, the active negative electrode material with a Dv50 of 10.2 $\mu$m was obtained.

Example 12

This embodiment provided a lithium ion battery, the specific preparation method was basically the same as Example 1, while the difference was as follows.

In the preparation of the negative electrode sheet, the needle coke raw material was crushed and sieved to obtain graphite powder; then, graphitization was performed on the graphite powder at 3300°C for 10 hours under an inert atmosphere. After cooling, crushing, and sieving, the active negative electrode material with a Dv50 of 9.1 $\mu$m was obtained.

Example 13

This embodiment provided a lithium ion battery, the specific preparation method was basically the same as Example 1, while the difference was as follows.

In the preparation of the negative electrode sheet, the asphalt coke raw material was crushed and sieved to obtain graphite powder; then, graphitization was performed on the graphite powder at 2500°C for 6 hours under an inert atmosphere. After cooling, crushing, and sieving, the active negative electrode material with a Dv50 of 18.2 $\mu$m was obtained.

Comparative Example 1

This comparative example provided a lithium ion battery, the specific preparation method was basically the same as Example 1, while the difference was as follows.

In the preparation of the negative electrode sheet, the needle coke raw material was crushed and sieved to obtain graphite powder; then, graphitization was performed on the graphite powder at 2800°C for 4 hours under an inert atmosphere. After cooling, crushing, and sieving, the active negative electrode material with a Dv50 of 17.3 $\mu$m was obtained.

Comparative Example 2

This comparative example provided a lithium ion battery, the specific preparation method was basically the same as Example 1, while the difference was as follows.

In the preparation of the negative electrode sheet, the asphalt coke raw material was crushed and sieved to obtain graphite powder; then, graphitization was performed on the graphite powder at 3000°C for 6 hours under an inert atmosphere. After cooling, crushing, and sieving, the active negative electrode material with a Dv50 of 6.1 $\mu$m was obtained.

Comparative Example 3

This comparative example provided a lithium ion battery, the specific preparation method was basically the same as Example 1, while the difference was as follows.

In the preparation of the negative electrode sheet, the petroleum coke raw material was crushed and sieved to obtain graphite powder; then, graphitization was performed on the graphite powder at 3300°C for 6 hours under an inert atmosphere. After cooling, crushing, and sieving, the active negative electrode material with a Dv50 of 15.6 $\mu$m was obtained.

Comparative Example 4

This comparative example provided a lithium ion battery, the specific preparation method was basically the same as Example 1, while the difference was as follows.

In the preparation of the negative electrode sheet, the petroleum coke raw material was crushed and sieved to obtain graphite powder; then, graphitization was performed on the graphite powder at 2650°C for 6 h under an inert atmosphere. After cooling, crushing, and sieving, the active negative electrode material with a Dv50 of 6.8 μm was obtained.

The negative electrode active materials, the negative electrode sheets, and the lithium ion batteries prepared in the Examples and Comparative Examples were tested respectively, and the specific test items and methods were as follows.

(1) La1

The La1 of the negative electrode sheet was obtained by testing and analyzing through the Rigku Ultima IV X-ray diffractometer of Rigaku Corporation of Japan. The XRD was calibrated by the silicon internal standard method, and the La1 was calculated by the Scherrer formula. The XRD test analysis conditions were: Cu target, scanning voltage of 40KV, current of 40mA, and scanning range of 5° to 90°. In order to reduce the error of spectrum fitting, the instrument measurement step size was 0.02° and the scanning speed was 5°/min.

(2) La2

The La2 of the negative electrode sheet was obtained by testing and analyzing through the Thermo Fisher Raman spectrometer. La2 was calculated using the following formula: $La2=2.4\times10^{-10}\times\lambda^4\times(A_D/A_G)^{-1}$, in which $\lambda$ was the incident laser wavelength of the Raman spectrum, $A_D$ was the peak area of the D peak (located in the 1320 to 1380$cm^{-1}$ wave band area) in the Raman spectrum, and $A_G$ is the peak area of the G peak (located in the 1560 to 1600$cm^{-1}$ wave band area) in the Raman spectrum. The Raman spectroscopy test analysis conditions were: at room temperature and normal atmospheric pressure, using a laser with a wavelength of 785 nm and a spot size of less than 1 $\mu m^2$.

(3) Voi

The Voi of the negative electrode sheet may be obtained by using an X-ray diffractometer. According to the general rules of X-ray diffraction analysis and the method for determining the lattice parameters of graphite JIS K 0131-1996 and JB/T4220-2011, the X-ray diffraction spectrum of the negative electrode sheet was obtained. According to the formula $V_{OI}=I_{004}/I_{110}$, the OI value of the negative electrode sheet was calculated, in which $I_{004}$ is the peak intensity of the 004 characteristic diffraction peak, and $I_{110}$ is the peak intensity of the 110 characteristic diffraction peak. The XRD test analysis conditions were: Cu target, scanning voltage of 40KV, current of 40mA, and scanning range of 5° to 90°. In order to reduce the error of spectrum fitting, the instrument measurement step size was 0.02° and the scanning speed was 5°/min.

(4) $D_V50$

The $D_V50$ of the negative electrode active material was measured by adopting the laser particle size test method, and using the Malvern particle size tester. The test steps were as follows. The sample to be tested was dispersed in deionized water containing a dispersant (such as 0.03 wt% nonylphenol polyoxyethylene ether) to form a mixture. The mixture was ultrasonicated for 2 minutes, and then placed in a particle size tester for testing.

(5) Porosity

The porosity of the negative electrode sheet was measured by adopting a vacuum density meter. Specifically, a ten-thousandth micrometer (accuracy: 0.0001mm) was used to measure the apparent volume of the electrode sheet. Apparent volume = sample thickness × sample length × sample width. The true volume of the sample was measured by a vacuum density meter, and the porosity = (apparent volume - true volume) / apparent volume.

(6) Lithium Precipitation Performance

The test used the BTSDA test system, the test temperature was 25°C, and the cycle test was performed as follows. The battery was charged to 4.45V at 3C constant current, and was charged to 0.05C at a constant voltage, stood for 10min, and then was discharged to 2.8V at 1C, stood for 10min, and this charge and discharge procedure was repeated for 200 cycles. The battery of 200th cycle was taken and disassembled, whether there was lithium precipitation on the negative electrode sheet was observed, and the ratio of the lithium precipitation area to the entire negative electrode sheet area was estimated. If the ratio of the lithium precipitation area to the entire electrode sheet area was less than 20%, then the situation was slight lithium precipitation; and if the ratio of the lithium precipitation area to the entire electrode sheet area was 20% or more, then the situation was severe lithium precipitation.

(7) Cycle Life

Fast charging cycle life was tested as follows. A battery charge and discharge tester was used to perform the charge and discharge cycle test on the lithium ion battery at 25°C. The charge and discharge system was: the battery was charged at 3C constant current to 4.25V, and was charged at constant voltage until the current drops to 0.02C, stood for 5 minutes, and then was discharged at 1C constant current to 2.5V, and this was one cycle. As the battery cycles, the battery capacity continued to decay. When the capacity decayed to 80% of the initial discharge capacity, the number of cycles experienced was recorded as the fast charging cycle life of the battery.

High temperature cycle life was tested as follows. A battery charge and discharge tester was used to test the lithium ion battery at 60°C. The charge and discharge system was: the battery was charged at 1C constant current to 4.25V, and was charged at constant voltage until the current drops to 0.02C, stood for 5 minutes, and then was discharged at 1C constant current to 2.5V, and this was one cycle. As the battery cycles, the battery capacity continued to decay. When the capacity decayed to 80% of the initial discharge capacity, the number of cycles experienced was recorded as the high temperature cycle life of the battery.

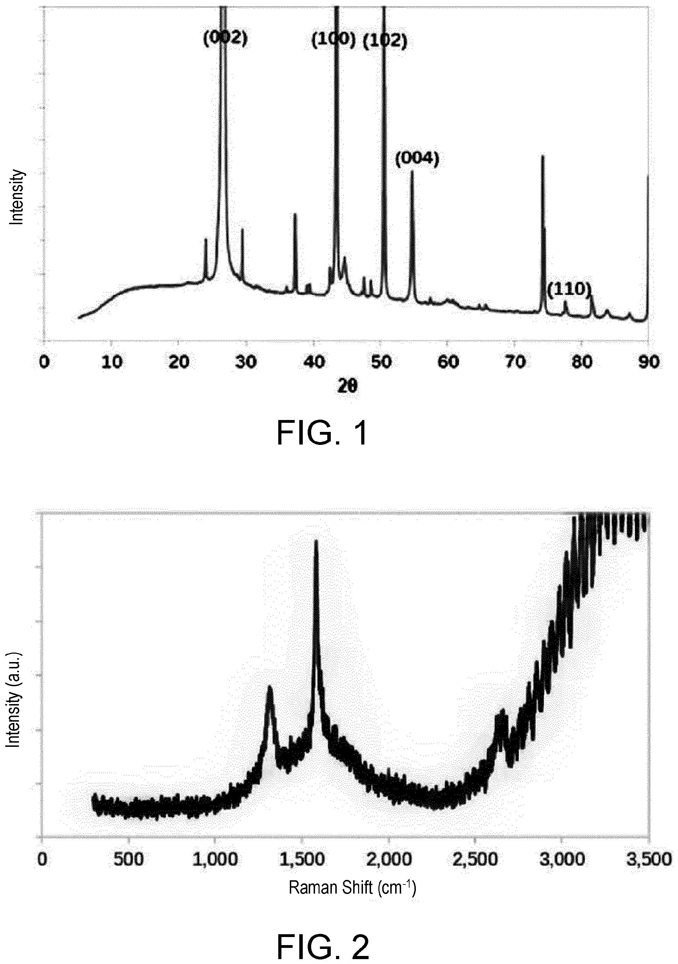

The XRD spectrum and Raman spectrum of the negative electrode sheet prepared in Example 2 are shown in FIG. 1 and FIG. 2 respectively, and other specific test results are shown in Table 1.

Table 1

| | La1 (nm) | La2 (nm) | $V_{on}$ | $D_V50$ (μm) | (\|La1-La2\|/Lax)/ ($V_{OI}*D_V50$) | Porosity (%)) | Lithium precipitation performance | Fast charging cycle life | High temperature cycle life |
|---|---|---|---|---|---|---|---|---|---|
| Example 1 | 60 | 74.6 | 11.2 | 10.5 | 1.66E-03 | 38 | No lithium precipitation | 3950 | 1980 |
| Example 2 | 58.9 | 69.4 | 12.6 | 10 | 1.20E-03 | 35 | No lithium precipitation | 3820 | 2050 |
| Example 3 | 53.9 | 67 | 15 | 10.7 | 1.22E-03 | 38 | No lithium precipitation | 3970 | 1970 |
| Example 4 | 48 | 63.1 | 11.4 | 15.1 | 1.39E-03 | 38 | No lithium precipitation | 3915 | 1960 |
| Example 5 | 48.5 | 63.3 | 12.5 | 15.1 | 1.24E-03 | 45 | No lithium precipitation | 3620 | 1905 |
| Example 6 | 48.2 | 63.2 | 11 | 15.1 | 1.43E-03 | 22 | No lithium precipitation | 3685 | 1920 |
| Example 7 | 45.4 | 60.2 | 12.1 | 8.2 | 2.48E-03 | 31 | No lithium precipitation | 3840 | 1985 |
| Example 8 | 63 | 77 | 15.2 | 11.2 | 1.07E-03 | 33 | No lithium precipitation | 3520 | 1810 |
| Example 9 | 69.5 | 80 | 10.1 | 5 | 2.60E-03 | 31 | No lithium precipitation | 3550 | 1835 |
| Example 10 | 40 | 56 | 12.9 | 19.6 | 1.13E-03 | 38 | No lithium precipitation | 3520 | 1850 |
| Example 11 | 31.8 | 50.2 | 34.6 | 10.2 | 1.04E-03 | 39 | No lithium precipitation | 3505 | 1830 |
| Example 12 | 73.2 | 85.5 | 15.2 | 9.1 | 1.04E-03 | 35 | No lithium precipitation | 3500 | 1800 |
| Example 13 | 27.5 | 45.3 | 20 | 18.2 | 1.08E-03 | 38 | No lithium precipitation | 3490 | 1805 |
| Comparative Example 1 | 61.1 | 76 | 18 | 17.3 | 0.63E-03 | 32 | Slight lithium precipitation | 2980 | 1560 |

(continued)

| | La1 (nm) | La2 (nm) | $V_{on}$ | $D_V50$ (μm) | ($|La1-La2|/Lax)/$ $(V_{OI}*D_V50)$ | Porosity (%)) | Lithium precipitation performance | Fast charging cycle life | High temperature cycle life |
|---|---|---|---|---|---|---|---|---|---|
| Comparative Example 2 | 35.2 | 54.9 | 10.5 | 6.1 | 5.60E-03 | 35 | No lithium precipitation | 2970 | 1320 |
| Comparative Example 3 | 55.7 | 68.1 | 14 | 15.6 | 8.34E-04 | 35 | No lithium precipitation | 2930 | 1580 |
| Comparative Example 4 | 42.1 | 57.6 | 11.3 | 6.8 | 3.50E-03 | 35 | Slight lithium precipitation | 2940 | 1420 |

According to the test results in Table 1, it can be seen that when the negative electrode sheet satisfies the equation: $1.0 \times 10^{-3} \leq (|La1-La2|/Lax)/(V_{OI} \times D_V50) \leq 3.0 \times 10^{-3}$, the lithium ion batteries prepared have good fast charging cycle life and high temperature cycle life, and no lithium precipitation occurs under fast charging conditions. Particularly, when the negative electrode sheet satisfies the equation: $1.2 \times 10^{-3} \leq (|La1-La2|/Lax)/(V_{OI} \times D_V50) \leq 2.5 \times 10^{-3}$, the fast charging cycle life and high temperature cycle life of the lithium ion batteries prepared are relatively higher. At the same time, according to the test results of Comparative Examples 1 to 4, when the calculated value of $(|La1-La2|/Lax)/(V_{OI} \times D_V50)$ of the negative electrode sheet is less than $1.0 \times 10^{-3}$ or greater than $3.0 \times 10^{-3}$, the cycle life and fast charging performance of the lithium ion batteries containing the negative electrode sheet are significantly reduced.

On the basis that the negative electrode sheet satisfies that the calculated value of $(|La1-La2|/Lax)/(V_{OI} \times D_V50)$ is in a range of $1.0 \times 10^{-3}$ to $3.0 \times 10^{-3}$, the inventors further studied and found that when the porosity of the negative electrode sheet is in a range of 30% to 40%, the lithium ion battery prepared has better fast charging performance and cycle life.

**Claims**

1. A negative electrode sheet, comprising: a negative electrode current collector and a negative electrode active material layer disposed on at least one surface of the negative electrode current collector, the negative electrode active material layer comprising a negative electrode active material, wherein the negative electrode active material comprises graphite, the negative electrode sheet satisfies an equation as follows: $1.0 \times 10^{-3} \leq (|La1-La2|/Lax)/(V_{OI} \times D_V50) \leq 3.0 \times 10^{-3}$;

   in the equation, La1 is an average crystal size in an a-axis direction of the negative electrode sheet obtained by XRD measurement, and a unit is nm,
   La2 is an average crystal size in the a-axis direction of the negative electrode sheet obtained by Raman spectroscopy measurement, and a unit is nm,
   Lax is a larger value of La1 and La2,
   Voi is a ratio of a peak intensity $I_{004}$ of a (004) crystal plane to a peak intensity $I_{110}$ of a (110) crystal plane of the negative electrode sheet obtained by XRD measurement, and
   $D_V50$ is a particle size corresponding to when a cumulative volume distribution percentage of the negative electrode active material reaches 50%, and a unit is μm.

2. The negative electrode sheet according to claim 1, wherein the negative electrode sheet satisfies an equation as follows: $1.2 \times 10^{-3} \leq (|La1-La2|/Lax)/(V_{OI} \times D_V50) \leq 2.5 \times 10^{-3}$.

3. The negative electrode sheet according to claim 1, wherein a range of La1 is 30 to 70 nm.

4. The negative electrode sheet according to claim 1, wherein a range of La2 is 50 to 80 nm.

5. The negative electrode sheet according to claim 3 or claim 4, wherein the range of La1 is 45 to 60 nm, and a range of La2 is 65 to 75 nm.

6. The negative electrode sheet according to claim 1, wherein a range of $V_{OI}$ is 10 to 35.

7. The negative electrode sheet according to claim 1, wherein a range of $V_{OI}$ is 11 to 15.

8. The negative electrode sheet according to claim 1, wherein a range of $D_V50$ is 5 to 20 $\mu$m.

9. The negative electrode sheet according to claim 1, wherein a range of $D_V50$ is 8 to 15 $\mu$m.

10. The negative electrode sheet according to claim 1, wherein a porosity of the negative electrode sheet is 20 to 45%.

11. The negative electrode sheet according to claim 1, wherein a porosity of the negative electrode sheet is 30 to 40%.

12. A secondary battery, comprising: a positive electrode sheet, a negative electrode sheet, and an electrolyte, wherein the negative electrode sheet is the negative electrode sheet according to any one of claims 1 to 11.

13. An electrical device, comprising the secondary battery according to claim 12.

FIG. 1

FIG. 2

EP 4 478 433 A1

Europäisches
Patentamt

European
Patent Office

Office européen
des brevets

**EUROPEAN SEARCH REPORT**

Application Number

EP 24 17 4266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/187106 A1 (NINGDE AMPEREX TECHNOLOGY LTD [CN]) 24 September 2020 (2020-09-24) * page 7 * * tables 1,4 * | 1-13 | INV. H01M4/02 H01M4/587 H01M10/0525 |
| X | EP 3 565 034 A1 (CONTEMPORARY AMPEREX TECHNOLOGY CO LTD [CN]) 6 November 2019 (2019-11-06) * paragraphs [0051], [0052] * * table 1 * | 1-13 | |
| X | US 2022/336844 A1 (KANG MENG [CN] ET AL) 20 October 2022 (2022-10-20) * paragraphs [0005], [0063], [0095] - [0103], [0174] - [0176] * | 1-13 | |
| X | US 7 906 240 B2 (HITACHI CHEMICAL CO LTD [JP]) 15 March 2011 (2011-03-15) * claims 1-9 * * page 7, line 29 - page 8, line 8 * | 1-13 | TECHNICAL FIELDS SEARCHED (IPC) |
| X | US 2023/100932 A1 (HE LIHONG [CN] ET AL) 30 March 2023 (2023-03-30) * paragraphs [0003], [0045] - [0067], [0132] * * claims 1-12 * | 1-13 | H01M |

The present search report has been drawn up for all claims

| Place of search | Date of completion of the search | Examiner |
|---|---|---|
| Munich | 10 October 2024 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 478 433 A1**

## ANNEX TO THE EUROPEAN SEARCH REPORT
## ON EUROPEAN PATENT APPLICATION NO.

EP 24 17 4266

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | | | Publication date | Patent family member(s) | | | Publication date |
|---|---|---|---|---|---|---|---|
| WO 2020187106 | A1 | | 24-09-2020 | CN | 109841831 | A | 04-06-2019 |
| | | | | CN | 112563491 | A | 26-03-2021 |
| | | | | EP | 3900085 | A1 | 27-10-2021 |
| | | | | JP | 7280942 | B2 | 24-05-2023 |
| | | | | JP | 2021536104 | A | 23-12-2021 |
| | | | | US | 2021351405 | A1 | 11-11-2021 |
| | | | | US | 2023307638 | A1 | 28-09-2023 |
| | | | | WO | 2020187106 | A1 | 24-09-2020 |
| EP 3565034 | A1 | | 06-11-2019 | CN | 108847489 | A | 20-11-2018 |
| | | | | EP | 3565034 | A1 | 06-11-2019 |
| | | | | US | 2019341612 | A1 | 07-11-2019 |
| US 2022336844 | A1 | | 20-10-2022 | CN | 115004418 | A | 02-09-2022 |
| | | | | EP | 4167324 | A1 | 19-04-2023 |
| | | | | JP | 7355942 | B2 | 03-10-2023 |
| | | | | JP | 2023511046 | A | 16-03-2023 |
| | | | | KR | 20220116216 | A | 22-08-2022 |
| | | | | US | 2022336844 | A1 | 20-10-2022 |
| | | | | WO | 2022021273 | A1 | 03-02-2022 |
| US 7906240 | B2 | | 15-03-2011 | CA | 2553707 | A1 | 28-07-2005 |
| | | | | CN | 1906780 | A | 31-01-2007 |
| | | | | EP | 1720211 | A1 | 08-11-2006 |
| | | | | HU | E038917 | T2 | 28-12-2018 |
| | | | | JP | 4760379 | B2 | 31-08-2011 |
| | | | | JP | WO2005069410 | A1 | 23-08-2007 |
| | | | | KR | 20060129310 | A | 15-12-2006 |
| | | | | KR | 20110092359 | A | 17-08-2011 |
| | | | | KR | 20130024968 | A | 08-03-2013 |
| | | | | KR | 20140108697 | A | 12-09-2014 |
| | | | | US | 2007190423 | A1 | 16-08-2007 |
| | | | | US | 2011045353 | A1 | 24-02-2011 |
| | | | | WO | 2005069410 | A1 | 28-07-2005 |
| US 2023100932 | A1 | | 30-03-2023 | CN | 112335080 | A | 05-02-2021 |
| | | | | CN | 114628625 | A | 14-06-2022 |
| | | | | DK | 3968416 | T3 | 10-06-2024 |
| | | | | EP | 3968416 | A1 | 16-03-2022 |
| | | | | EP | 4439731 | A1 | 02-10-2024 |
| | | | | ES | 2981190 | T3 | 07-10-2024 |
| | | | | FI | 3968416 | T3 | 13-06-2024 |
| | | | | JP | 7250908 | B2 | 03-04-2023 |
| | | | | JP | 2022539930 | A | 14-09-2022 |
| | | | | JP | 2023068117 | A | 16-05-2023 |
| | | | | KR | 20230003290 | A | 05-01-2023 |

EPO FORM P0459

For more details about this annex : see Official Journal of the European Patent Office, No. 12/82

16

## ANNEX TO THE EUROPEAN SEARCH REPORT
## ON EUROPEAN PATENT APPLICATION NO.

EP 24 17 4266

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2024

| Patent document cited in search report | Publication date | Patent family member(s) | | Publication date |
|---|---|---|---|---|
| | | PL | 3968416 T3 | 23-09-2024 |
| | | US | 2023100932 A1 | 30-03-2023 |
| | | US | 2023197958 A1 | 22-06-2023 |
| | | US | 2024213474 A1 | 27-06-2024 |
| | | WO | 2021243648 A1 | 09-12-2021 |

EPO FORM P0459

For more details about this annex : see Official Journal of the European Patent Office, No. 12/82